(19) Europäisches Patentamt
European Patent Office
Office européen des brevets

(11) **EP 2 989 426 B1**

(12) **FASCICULE DE BREVET EUROPEEN**

(45) Date de publication et mention de la délivrance du brevet:
**25.04.2018 Bulletin 2018/17**

(21) Numéro de dépôt: **14726689.4**

(22) Date de dépôt: **22.04.2014**

(51) Int Cl.:
*G01D 4/00* *(2006.01)*        *F24D 19/10* *(2006.01)*
*G06Q 30/04* *(2012.01)*

(86) Numéro de dépôt international:
**PCT/FR2014/050967**

(87) Numéro de publication internationale:
**WO 2014/174199 (30.10.2014 Gazette 2014/44)**

(54) **MÉTHODE ET DISPOSITIF POUR INDIQUER LA CONSOMMATION ET/OU L'EFFICACITÉ D'UNE INSTALLATION DE CHAUFFAGE**

VERFAHREN UND VORRICHTUNG ZUR ANZEIGE DES KRAFTSTOFFVERBRAUCHES UND/ODER DER FUNKTIONSTÜCHTIGKEIT EINER HEIZUNGSANLAGE

METHOD AND DEVICE FOR INDICATING THE FUEL CONSUMPTION AND/OR EFFICIENCY OF A HEATING INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2013 FR 1353735**

(43) Date de publication de la demande:
**02.03.2016 Bulletin 2016/09**

(73) Titulaire: **Boostheat**
**69200 Venissieux (FR)**

(72) Inventeur: **JACQUET, Luc**
**30900 Nîmes (FR)**

(74) Mandataire: **Cabinet Plasseraud**
**66, rue de la Chaussée d'Antin**
**75440 Paris Cedex 09 (FR)**

(56) Documents cités:
| | |
|---|---|
| WO-A1-2011/003023 | DE-A1-102008 003 866 |
| FR-A1- 2 457 444 | FR-A1- 2 512 881 |
| US-A1- 2010 174 643 | US-B1- 6 701 721 |

**Description**

La présente invention est relative aux installations de chauffage et aux méthodes et dispositifs pour indiquer la consommation et/ou l'efficacité desdites installations de chauffage.

Elle concerne plus particulièrement une installation de chauffage comprenant au moins un dispositif de pompe à chaleur, un circuit de distribution de fluide de chauffage et une pluralité de convecteurs ou radiateurs.

Dans l'art antérieur, il est connu de déterminer un coefficient de performance (ou coefficient d'efficacité) pour le dispositif de pompe à chaleur en question, en particulier les dispositifs utilisant un compresseur de type électrique. Toutefois, le coefficient d'efficacité d'une telle installation dépend des conditions climatiques, en particulier de la température extérieure du milieu dans lequel sont prélevées les calories. En pratique, il est courant d'adjoindre un dispositif de chauffage d'appoint pour relayer la pompe à chaleur afin de passer les périodes critiques.

Mais dans l'art connu, l'utilisateur d'une telle installation de chauffage n'a que peu de moyen de comparer les performances réelles par rapport aux performances annoncées, et de vérifier que les économies attendues grâce au système de pompe à chaleur se matérialisent en termes d'économies. En particulier, l'utilisateur (le payeur) ne peut pas déduire de sa facture d'électricité les économies que la pompe à chaleur lui a apportées, et n'a pas d'information sur l'empreinte écologique de son installation.

Il est ainsi apparu intéressant d'améliorer les informations mises à disposition de l'utilisateur payeur concernant l'installation de chauffage, ses performances énergétiques, et sa pertinence économique et écologique.

Le document US2010/0174643, par exemple, divulgue une méthode permettant de calculer la pertinence économique de l'utilisation d'énergies renouvelables dans des systèmes de chauffage ou de climatisation d'habitations ou de bâtiments.

Selon la présente invention, il est proposé un procédé pour indiquer à un utilisateur la consommation et/ou l'efficacité d'une installation de chauffage, ladite installation de chauffage comprenant au moins une pompe à chaleur ayant un compresseur thermique mis en mouvement au moyen d'un apport d'énergie thermique, un circuit de distribution de fluide de chauffage et une pluralité de convecteurs ou radiateurs, recevant une première quantité d'énergie Q1,
le procédé comprenant au moins :

A- déterminer, sur une période de temps prédéterminée, une deuxième quantité d'énergie **Q2,** correspondant audit apport d'énergie thermique, et comprenant une énergie facturée **Q2F** correspondant à une quantité de combustible consommée facturable par la pompe à chaleur,
B- déterminer, sur la même période de temps prédéterminée, une troisième quantité d'énergie **Q3** correspondant à une énergie gratuite prélevée dans l'environnement extérieur, soit (**B1-**) directement au moyen de capteurs de température et débit relatifs à une unité extérieure de la pompe à chaleur, soit (**B2-**) indirectement en mesurant, sur la même période de temps prédéterminée, la première quantité d'énergie **Q1** fournie au circuit de distribution et en déduisant **Q3** en utilisant **Q3**=Q1-Q2,
**C-** afficher au moins les quantités Q2F et Q3, en correspondance avec la période de temps prédéterminée, sur un écran d'affichage et/ou sur un document destiné à la facturation du client.

Grâce à ces dispositions, on peut mesurer les différentes quantités d'énergie mises en jeu pour l'installation de chauffage et mettre à disposition ces informations pour l'utilisateur, en particulier de l'utilisateur en charge d'acquitter la facture d'énergie pour le combustible facturé. L'utilisateur peut ainsi obtenir des informations utiles sur la performance économique et écologique de son l'installation de chauffage. La détermination de ces informations peut être relative à un comptage (c'est-à-dire une intégration) sur une ou plusieurs périodes prédéterminées.

On remarque de plus que le compresseur thermique utilise comme source froide principalement le circuit de distribution de fluide de chauffage ; ceci permet de délivrer dans le circuit de distribution de fluide de chauffage toutes les calories qui sont mises à disposition pour faire fonctionner le compresseur thermique ; aucune calorie n'étant dissipée (et donc perdue) dans un quelconque circuit de refroidissement auxiliaire.

Dans divers modes de réalisation du procédé selon l'invention, on peut éventuellement avoir recours en outre à l'une et/ou à l'autre des dispositions suivantes :

- selon un aspect, l'apport d'énergie thermique est réalisé principalement au moyen d'un brûleur de combustible ; moyennant quoi il n'est pas fait appel au réseau électrique pour fournir les calories mettant en mouvement le compresseur ;

- selon un autre aspect, le combustible est du gaz et la consommation facturée est mesurée au moyen d'un compteur de gaz ; moyennant quoi on utilise un combustible très courant et on peut facilement connaitre la consommation de ce combustible ;

- selon un autre aspect, le combustible est du fioul domestique et la consommation facturée est mesurée au moyen d'un compteur de fioul ; moyennant quoi on peut aussi utiliser ce combustible très courant et on peut facilement connaitre la consommation de ce combustible ;

- selon un autre aspect, le combustible est formé de pellets de bois et la consommation facturée est mesurée au moyen d'un compteur, par exemple par pesage; moyennant quoi on utilise un combustible renouvelable et on peut facilement connaitre la consommation de ce combustible ;

- selon un autre aspect, on mesure la première quantité d'énergie **Q1** fournie au circuit de distribution au moyen de premier et deuxième capteurs de température respectivement agencés sur l'aller et sur le retour sur le circuit de distribution, et au moyen d'un capteur de débit de fluide de chauffage ; moyennant quoi on obtient une information fiable de la première quantité d'énergie Q1 ;

- selon un autre aspect, on affiche en outre un équivalent financier des quantités d'énergie non facturables, à savoir de la quantité d'énergie Q3, et le cas échéant de la quantité d'énergie Q2NF, sachant que Q3+Q2NF est égal à Q1-Q2F; moyennant quoi l'utilisateur peut connaître directement les économies réalisées grâce à la performance de son installation de chauffage ;

- selon un autre aspect, la pompe à chaleur est dépourvue de pompe électrique et la consommation électrique de l'installation de chauffage est très inférieure à Q1, par exemple inférieure à 10% de Q1nom, Q1nom correspondant à la puissance nominale de l'installation de chauffage ; de sorte que l'on fait très peu appel à l'énergie électrique dans l'installation de chauffage ;

L'invention vise par ailleurs un dispositif d'indication de la consommation et/ou de l'efficacité d'une installation de chauffage, ladite installation de chauffage comprenant au moins une pompe à chaleur ayant un compresseur thermique mis en mouvement au moyen d'un apport d'énergie thermique, un circuit de distribution de fluide de chauffage et une pluralité de convecteurs ou radiateurs, le dispositif comportant :

- des moyens pour déterminer une première quantité d'énergie Q1 fournie aux convecteurs ou radiateurs, ou des moyens pour déterminer la quantité d'énergie Q3 correspondant à une énergie gratuite prélevée dans l'environnement extérieur,

- des moyens pour déterminer la quantité d'énergie correspondant à une consommation facturée (Q2, Q2F) de combustible consommé par la pompe à chaleur,

- une unité électronique à laquelle sont raccordés les moyens pour déterminer les quantités d'énergie Q3, Q2, caractérisé en ce l'unité électronique est adaptée pour calculer des quantités d'énergie (Q2,Q3) sur une période temps prédéterminée, et/ou pour afficher ces informations sur un écran d'affichage, et/ou pour préparer l'édition d'un document destiné à la facturation du client.

Dans divers modes de réalisation du dispositif selon l'invention, on peut éventuellement avoir recours en outre à l'une et/ou à l'autre des dispositions suivantes :

- selon un aspect, l'apport d'énergie thermique est réalisé principalement au moyen d'un brûleur de combustible, le combustible étant de préférence du gaz, du fioul domestique ou des pellets de bois la consommation facturée Q2F étant mesurée au moyen d'un compteur de gaz, fioul ou autre ; moyennant quoi on utilise un combustible très courant et on obtient une information fiable de la quantité d'énergie facturable Q2F ;

- selon un autre aspect, le dispositif peut comprendre en outre des capteurs de température et débit relatifs à une unité extérieure de la pompe à chaleur pour mesurer la quantité d'énergie **Q3** correspondant à une énergie gratuite prélevée dans l'environnement extérieur ; de sorte que la mesure de la troisième quantité d'énergie **Q3** peut être obtenue de façon directe et de manière fiable ;

- selon un autre aspect, le dispositif peut comprendre en outre des capteurs de température et débit relatifs au circuit de distribution de chauffage pour mesurer la quantité d'énergie **Q1** fournie au circuit de distribution de chauffage ; de sorte que la mesure de la première quantité d'énergie **Q1** peut être obtenue de façon directe et de manière fiable ;

- selon un autre aspect, la pompe à chaleur est dépourvue de pompe électrique et la consommation électrique de l'installation de chauffage est très inférieure à Q1, par exemple inférieure à 10% de **Q1nom,** Q1nom correspondant à la puissance nominale de l'installation de chauffage ; de sorte que l'on fait très peu appel à l'énergie électrique dans l'installation de chauffage.

D'autres aspects, buts et avantages de l'invention apparaîtront à la lecture de la description suivante de deux de ses modes de réalisation, donnés à titre d'exemples non limitatifs à l'aide des dessins joints sur lesquels :

- la figure 1 montre un schéma de principe d'une installation de chauffage selon un mode de réalisation de l'invention,

- la figure 2 représente schématiquement une unité électronique et ses périphériques utilisés dans l'installation de la figure 1, et

- la figure 3 montre un exemple de facture illustrant les informations mises à disposition de l'utilisateur.

Sur les différentes figures, les mêmes références désignent des éléments identiques ou similaires.

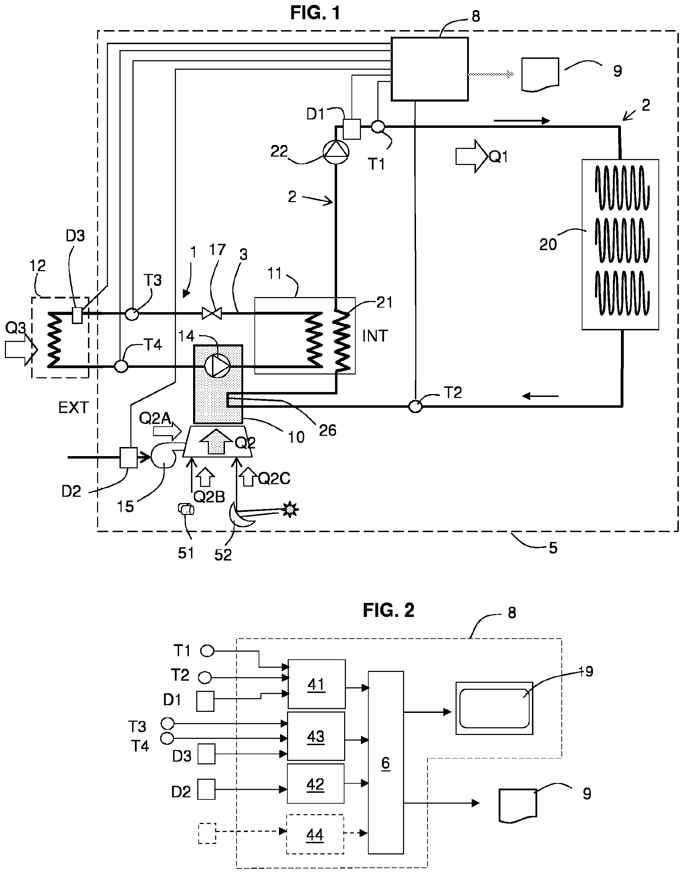

La figure 1 représente schématiquement installation de chauffage comprenant un circuit de distribution **2** de fluide de chauffage, le fluide délivrant des calories à une pluralité de récepteurs-échangeurs, de type convecteurs ou radiateurs **20** comme il est connu dans l'art.

Le fluide peut être comme dans l'exemple illustré de l'eau ou une solution aqueuse, mais il n'est pas exclu d'utiliser de l'air ou un autre fluide pour le circuit de distribution. Les récepteurs-échangeurs peuvent prendre la forme d'un plancher chauffant, de radiateurs classiques de parois chauffantes ou de tout autre type d'échangeur permettant de délivrer des calories à l'intérieur d'un bâtiment **5**. Le bâtiment en question peut être une maison individuelle, un immeuble à usage collectif, un bâtiment industriel tout autre type de local nécessitant une installation de chauffage. Le circuit de distribution peut également desservir plusieurs bâtiments ou plusieurs locaux. Le circuit de distribution est un circuit fermé ; une pompe de circulation **22** aussi appelée circulateur 22 impartit au fluide de chauffage un débit de boucle fermée. Le circuit de distribution peut alimenter des piscines privées ou collectives. Le circuit de distribution peut alimenter des processus industriels nécessitant des apports de chaleur ou de froid.

Le circuit de distribution **2** est couplé thermiquement à un dispositif de pompe à chaleur **1**. Ce dispositif de pompe à chaleur 1, aussi appelé plus simplement 'pompe à chaleur' comprend un circuit de fluide **3** caloporteur (aussi appelé parfois fluide frigorigène). Dans l'exemple illustré ici, on choisira de préférence du dioxyde de carbone ($CO_2$) comme fluide caloporteur, mais on pourrait choisir tout autre fluide compressible convenant à un circuit de pompe à chaleur.

La quantité de calories fournie au circuit de distribution et aux différents radiateurs ou convecteurs sera appelée première quantité d'énergie **Q1** dans la suite de ce document.

Le dispositif de pompe à chaleur **1** comprend un échangeur intérieur **11,** un échangeur extérieur **12,** un ensemble pompe **10** comprenant un compresseur **14,** et un détendeur **17.**

L'échangeur extérieur **12** permet au fluide caloporteur **3** de recevoir des calories en provenance du milieu extérieur, de manière connue en soi, par exemple de l'air extérieur, d'un circuit de géothermie, d'un cours d'eau, ou de tout autre élément à partir duquel on peut prélever des calories.

L'échangeur intérieur **11** permet au fluide caloporteur **3** de céder des calories au circuit de chauffage **2** susmentionné de manière connue en soi.

Le détendeur **17** est également un composant connu en soi, et donc non décrit en détails ici.

Le compresseur **14** est un compresseur de type 'thermique'. Un compresseur 'thermique' est un compresseur mis en mouvement au moyen d'un apport d'énergie thermique, comme par exemple un compresseur décrit dans la demande de brevet FR2971562A1. On peut aussi appeler un compresseur 'thermique' un compresseur entrainé par un moteur à gaz ou une machine à compression fonctionnant par absorption de chaleur.

Dans ces conditions, il n'y a pas de compresseur de type électrique dans l'ensemble pompe **10** de la pompe à chaleur ; l'énergie est principalement apportée sous forme thermique, une quantité d'énergie électrique négligeable peut cependant être utilisée pour des accessoires ou de l'instrumentation.

L'apport d'énergie thermique pour entraîner le compresseur peut être fait par différents moyens, et permet d'apporter une quantité d'énergie appelée deuxième quantité d'énergie **Q2** à l'ensemble pompe **10** et en particulier au compresseur **14**. L'apport thermique peut provenir de la combustion d'un combustible de type fossile comme du gaz, du fioul ou tout autre combustible similaire, cet apport d'énergie sera noté **Q2A.**

L'apport thermique peut provenir de façon complémentaire de la combustion d'un combustible renouvelable comme du bois **51,** par exemple des pellets de bois ou granules de bois, du bio-gaz, des matières végétales séchées, ou encore de résidus de tout type pouvant être brûlés ; cet apport d'énergie venant de combustible renouvelable sera noté **Q2B.** on peut aussi brûler des effluents 'gratuits' résidus de procédé(s) industriel(s).

Enfin, l'apport thermique peut provenir de façon complémentaire d'une source d'énergie sans combustion comme par exemple un flux solaire concentré **52.** Cet apport d'énergie sans combustion sera noté **Q2C.** On peut aussi récupérer de l'énergie dans des eaux grises chaudes destinées à l'égout comme un apport d'énergie complémentaire.

Ainsi, l'apport thermique total à l'ensemble pompe peut s'exprimer sous la forme **Q2 = Q2A + Q2B + Q2C.** Il est à noter que dans un exemple de réalisation simple, on fera uniquement appel à la source de combustible fossile de type gaz, auquel cas on aura la formule **Q2 = Q2A.**

De plus, l'apport thermique total peut s'exprimer sous la forme **Q2 = Q2F + Q2NF, Q2F** étant la partie de l'apport thermique qui est facturable donc à payer par l'utilisateur, alors que **Q2NF** désigne la partie de l'apport thermique qui est non facturable, comme le flux solaire ou la combustion d'effluents disponibles à brûler (cas d'un bâtiment industriel de chauffage collectif).

Q2F comprend la partie Q2A et tout ou partie de la partie Q2B.

Concernant l'apport venant du combustible de type fossile, celui-ci est brûlé dans un brûleur **15** alimenté par canalisation sur laquelle est disposé un compteur ou un débitmètre **D2.**

Comme connu dans l'art, la quantité d'énergie fournie au circuit de chauffage **Q1** peut s'écrire comme la somme de l'apport d'énergie **Q2** apporté à l'ensemble pompe 10 et d'une quantité d'énergie 'gratuite' appelée troisième quantité d'énergie notée **Q3** prélevée dans l'environnement extérieur au moyen de l'unité extérieure **12** susmentionné.

Autrement dit : **Q1 = Q2 + Q3.** En régime établi, on peut écrire P1 = P2 + P3 si P1,P2,P3, sont les puissances instantanées correspondant aux quantités d'énergie Q1,Q2,Q3.

La deuxième quantité d'énergie **Q2** peut être déterminée au moyen du débitmètre ou du compteur D2 déjà mentionnés. Dans le cas d'un compteur classique, l'intégration dans le temps est déjà effectuée et il suffira, notamment pour un compteur de type électronique, de faire une différence entre la valeur à un instant de fin de période et la valeur à un instant de début de période.

Il faut noter qu'une partie de **Q2** est transférée directement au fluide du circuit de chauffage moyennant un ou plusieurs échangeurs **26** qui servent à refroidir le compresseur **14** à partir du fluide de chauffage dont la température n'excède pas 80°C généralement. Aucune calorie apportée pour faire fonctionner l'ensemble pompe **10** n'est ainsi perdue ; avantageusement le système est dépourvu de dispositif de refroidissement qui évacue des calories de l'ensemble pompe autre part que dans le fluide de chauffage. Les calculs réalisés en sont d'autant plus exacts.

La quantité d'énergie **Q3** peut quant à elle être déterminée directement ou indirectement.

La méthode directe fait appel d'une part à des capteurs de température **T3,T4** disposés de préférence aux bornes de l'unité extérieure **12** de la pompe à chaleur et d'autre part d'une mesure de débit **D3** du fluide caloporteur 3.

En partant de l'expression instantanée P3 = D3 x(T3-T4), on intègre temporellement comme suit :

$$Q3 \quad = \quad \int [D3 \, x(T3 - T4)]dt$$

sur une période de temps considérée.

La méthode indirecte consiste à déterminer tout d'abord la première quantité d'énergie **Q1** au moyen d'une part de capteur de température **T1** et **T2** disposés respectivement sur le départ et le retour de fluide de chauffage par rapport à l'unité intérieure **11** de la pompe à chaleur et d'autre part d'une information de débit D1 du fluide de chauffage.

On peut écrire les équations suivantes

$$P1 = D1 \, x \, (T1-T2)$$

$$Q1 \quad = \quad \int [D1 \, x(T1 - T2)]dt$$

sur une période de temps donnée

Après avoir déterminé la première quantité d'énergie **Q1**, on peut en déduire, en connaissant la deuxième quantité d'énergie **Q2** sur la même période de temps donné, la troisième quantité d'énergie **Q3** prélevée dans l'environnement extérieur, selon la formule :

$$Q3 = Q1 - Q2.$$

Avantageusement selon l'invention, il est proposé d'utiliser les quantités d'énergie **Q2** et **Q3** pour mettre en valeur les performances de l'installation de chauffage.

Plus précisément, et comme ceci ressort des figures 1 et 2, il est prévu une unité électronique **8** à laquelle sont raccordés les moyens pour déterminer la deuxième quantité d'énergie **Q2** et soit les moyens pour déterminer directement la troisième quantité d'énergie **Q3** soit les moyens pour déterminer tout d'abord la première quantité d'énergie **Q1** et en déduire la troisième quantité d'énergie **Q3**.

De plus, il est prévu optionnellement un écran d'affichage **19** sur lequel peuvent être affichés d'une part une ou plusieurs périodes de temps correspondant aux calculs des deuxième et troisième quantité d'énergie **Q2, Q3** sur lesdites périodes de temps et d'autre part les valeurs en kilowatts-heures de ces deuxième et troisième quantités d'énergie Q2 et Q3 pour chaque périodes de temps. Les périodes de temps en question peuvent être par exemple la semaine, le mois, le trimestre, la saison de chauffe, un semestre, l'année.

En référence à la figure 2, l'unité électronique 8 comprend un premier module fonctionnel de calcul **41,** optionnel, en charge de déterminer la première quantité d'énergie **Q1** au moyen des informations de température **T1,T2** et de débit D1, ceci sur une période de temps prédéterminée.

De plus, l'unité électronique 8 comprend un deuxième module fonctionnel de calcul **42** en charge de déterminer la deuxième quantité d'énergie **Q2** au moyen des informations compteur **D2,** ceci sur la même période prédéterminée. Dans un cas de figure simple, la quantité facturable et obtenue directement à partir d'un seul compteur D2, car dans ce cas **Q2F=Q2.**

De plus, l'unité électronique **8** comprend (de façon optionnelle en alternative au premier module de calcul 41) un troisième module fonctionnel de calcul **43,** optionnel, en charge de déterminer la troisième quantité d'énergie **Q3** des informations de température **T3,T4** et de débit D3, ceci sur la même période de temps prédéterminé.

Un module de calcul de synthèse **6** permet de mettre en forme les quantités d'énergie **Q2F** et **Q3** en vue de les mettre à disposition pour affichage et/ou édition comme il sera détaillé plus loin. Le module de calcul de synthèse **6** permet en outre le cas échéant de calculer un coefficient d'efficacité **Q1/Q2** (ou plutôt **Q1/Q2F** si on utilise des moyens d'apport thermiques complémentaires) similaire à un coefficient de performance d'une pompe à chaleur connue dans l'art.

L'unité de contrôle 8 élabore ainsi un ensemble d'informations à destination de l'affichage local et à destination de tout équipement électronique distant, l'ensemble d'informations contenant une ou plusieurs fois :

- la période de temps prédéterminé,
- la deuxième quantité d'énergie facturable **Q2F,** ainsi que le cas échéant son équivalent financier représentant son coût si l'information est disponible localement,

- la troisième quantité d'énergie **Q3,** et de façon optionnelle, et si l'information de coût équivalent est disponible localement, l'équivalent financier de cette troisième quantité d'énergie **Q3** représentant l'économie réalisée grâce à la présence de la pompe à chaleur. Le cas échéant, Q3 peut être complémenté par Q2NF (partie 'gratuite' de l'apport thermique Q2).

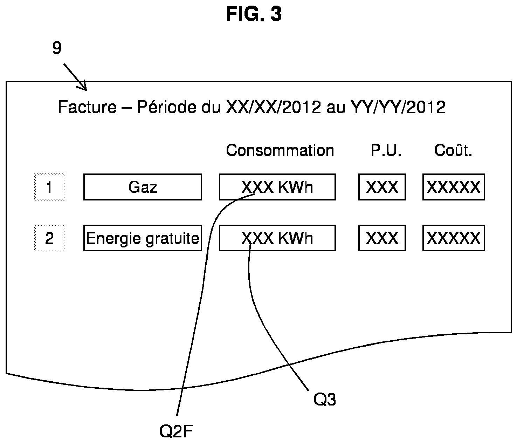

Ces informations, après transmission à un équipement électronique ou à un ordinateur peuvent être éditées sous la forme d'une facture **9** dont un exemple est représenté à la figure 3.

Il est à noter que la position des capteurs de température **T1** à **T4** et des capteurs de débit **D1,D2,D3** peut différer des positions représentées dans l'exemple illustré.

Le circulateur **22** peut être entraîné par un moteur électrique, mais il convient de noter que la consommation électrique totale de l'installation de chauffage, même en tenant compte de cette consommation électrique du circulateur 22 reste très inférieure à la quantité d'énergie **Q1** fournie au circuit de distribution de chauffage, en particulier inférieur à 10 % de **Q1nom,** Q1nom correspondant à la puissance nominale de l'installation de chauffage.

## Revendications

1. **Procédé** pour indiquer à un utilisateur la consommation et/ou l'efficacité d'une installation de chauffage, ladite installation de chauffage comprenant au moins une pompe à chaleur (1) ayant un compresseur thermique (14) mis en mouvement au moyen d'un apport d'énergie thermique, un circuit de distribution de fluide de chauffage (2) et une pluralité de convecteurs ou radiateurs (20), recevant une première quantité d'énergie Q1, le procédé comprenant au moins :

   **A-** déterminer, sur une période de temps prédéterminée, une deuxième quantité d'énergie Q2, correspondant audit apport d'énergie thermique, et comprenant une énergie facturée Q2F correspondant à une quantité de combustible consommée facturable par la pompe à chaleur,
   **B-** déterminer, sur la même période de temps prédéterminée, une troisième quantité d'énergie Q3 correspondant à une énergie gratuite prélevée dans l'environnement extérieur, soit (B1-) directement au moyen de capteurs de température (T3,T4) et débit (D3) relatifs à une unité extérieure (12) de la pompe à chaleur, soit (B2-) indirectement en mesurant, sur la même période de temps prédéterminée, la première quantité d'énergie Q1 fournie au circuit de distribution et en déduisant Q3 en utilisant Q3=Q1-Q2,
**C-** afficher au moins les quantités Q2F et Q3, en correspondance avec la période de temps prédéterminée, sur un écran d'affichage et/ou sur un document destiné à la facturation du client,

**caractérisé en ce que** le compresseur thermique utilise comme source froide principalement le circuit de distribution de fluide de chauffage (2).

2. Procédé selon la revendication 1, dans lequel l'apport d'énergie thermique est réalisé principalement au moyen d'un brûleur (15) de combustible.

3. Procédé selon la revendication 2, dans lequel le combustible comprend du gaz et/ou du fioul domestique et/ou des pellets de bois, et la consommation facturée Q2F est mesurée au moyen d'un compteur (D2).

4. Procédé selon la revendication l'une des revendications 1 à 3, dans lequel au cours de l'étape B2-, on mesure la première quantité d'énergie Q1 fournie au circuit de distribution au moyen de premier et deuxième capteurs de température (T1,T2) respectivement agencés sur l'aller et sur le retour sur le circuit de distribution, et au moyen d'un capteur de débit (D1) de fluide de chauffage.

5. Procédé selon l'une des revendications 1 à 4, dans lequel on effectue en outre un calcul d'un équivalent financier des quantités d'énergie non facturables, à savoir de la quantité d'énergie Q3, et le cas échéant de la quantité d'énergie Q2NF, sachant que Q3+Q2NF est égal à Q1-Q2F, cet équivalent financier étant destiné à être affiché.

6. Procédé selon l'une des revendications 1 à 5, dans lequel la pompe à chaleur est dépourvue de pompe électrique et la consommation électrique de l'installation de chauffage est très inférieure à Q1, par exemple inférieure à 10% de Q1nom, Q1nom correspondant à la puissance nominale de l'installation de chauffage.

7. Dispositif d'indication de la consommation et/ou de l'efficacité d'une installation de chauffage, ladite installation de chauffage comprenant au moins une pompe à chaleur (1) ayant un compresseur thermique (14) mis en mouvement au moyen d'un apport d'énergie thermique, un circuit de distribution (2) de fluide de chauffage et une pluralité de convecteurs ou radiateurs (20), le dispositif comportant :

   - des moyens pour déterminer la quantité d'énergie Q3 correspondant à une énergie gratuite prélevée dans l'environnement extérieur, ou des moyens pour déterminer la quantité d'énergie Q1 fournie aux convecteurs ou radiateurs,
- des moyens pour déterminer la quantité d'énergie correspondant à une consommation facturée (Q2,Q2A) de combustible consommé par la pompe à chaleur,
- une unité électronique (8) à laquelle sont raccordés les moyens pour déterminer les quantités d'énergie Q2 et Q3 ou Q1, l'unité électronique étant adaptée pour calculer des quantités d'énergie (Q2,Q3) sur une période temps prédéterminée, et/ou pour afficher ces informations sur un écran d'affichage, et/ou pour préparer ces données pour l'édition d'un document destiné à la facturation du client, **caractérisé en ce que** le compresseur thermique utilise comme source froide principalement le circuit de distribution de fluide de chauffage.

8. Dispositif selon la revendication 7, dans lequel l'apport d'énergie thermique est réalisé principalement au moyen d'un brûleur (15) de combustible, le combustible étant de préférence du gaz ou du fioul domestique, et la consommation facturée Q2F étant mesurée au moyen d'un compteur de gaz ou de fioul (D2).

9. Dispositif selon l'une des revendications 7 ou 8, comprenant en outre des capteurs de température (T3, T4) et débit (D3) relatifs à une unité extérieure (12) de la pompe à chaleur pour mesurer la quantité d'énergie Q3 correspondant à une énergie gratuite prélevée dans l'environnement extérieur.

10. Dispositif selon l'une des revendications 7 à 9, comprenant en outre des capteurs de température (T1, T2) et débit (D1) relatifs au circuit de distribution de chauffage pour mesurer la quantité d'énergie Q1 fournie au circuit de distribution de chauffage.

11. Dispositif selon l'une des revendications 7 à 10, dans lequel la pompe à chaleur est dépourvue de pompe électrique et la consommation électrique de l'installation de chauffage est très inférieure à Q1, par exemple inférieure à 10% de Q1nom, Q1nom correspondant à la puissance nominale de l'installation de chauffage.

**Patentansprüche**

1. **Verfahren** zum Angeben des Verbrauches und/oder des Wirkungsgrads einer Heizungsanlage zu einem Benutzer, wobei die Heizungsanlage zumindest eine Wärmepumpe (1) mit einem thermischen Kompressor (14), der mittels einer Wärmeenergiezufuhr in Bewegung gesetzt wird, einen Heizfluidverteilkreis (2) und eine Mehrzahl von Konvektoren oder Radiatoren (20) enthält, die eine erste Energiemenge Q1 aufnehmen, wobei das Verfahren zumindest umfasst:

A- Ermitteln einer zweiten Energiemenge Q2 über eine vorbestimmte Zeitspanne, die der Wärmeenergiezufuhr entspricht und eine abgerechnete Energiemenge Q2F umfasst, die einer von der Wärmepumpe verbrauchten, abrechenbaren Brennstoffmenge entspricht,
B- Ermitteln einer dritten Energiemenge Q3 über die gleiche vorbestimmte Zeitspanne, die einer kostenlosen Energie entspricht, die der Außenumgebung entnommen wird, entweder (B1-) direkt mittels Temperatur- (T3, T4) und Durchflussmengensensoren (D3) bezogen auf eine äußere Einheit (12) der Wärmepumpe, oder (B2-) indirekt durch Messung der ersten Energiemenge Q1 über die gleiche vorbestimmte Zeitspanne, die dem Verteilkreis bereitgestellt wird, und durch Ableitung von Q3 unter Anwendung von Q3 = Q1 - Q2,
C- Anzeigen zumindest der Mengen Q2F und Q3 entsprechend der vorbestimmten Zeitspanne auf einem Anzeigebildschirm und/oder auf einem Dokument, das zur Abrechnung mit dem Kunden bestimmt ist,
**dadurch gekennzeichnet,**
**dass** der thermische Kompressor als Kältequelle im Wesentlichen den Heizfluidkreis (2) verwendet.

2. Verfahren nach Anspruch 1, wobei die Wärmeenergiezufuhr im Wesentlichen mittels eines Brennstoffbrenners (15) erfolgt.

3. Verfahren nach Anspruch 2, wobei der Brennstoff Gas und/oder Heizöl und/oder Holzpellets umfasst und der abgerechnete Verbrauch Q2F mittels eines Zählers (D2) gemessen wird.

4. Verfahren nach einem der Ansprüche 1 bis 3, wobei im Laufe von Schritt B2- die dem Verteilkreis bereitgestellte erste Energiemenge Q1 mittels eines ersten und eines zweiten Temperatursensors (T1, T2) gemessen wird, die jeweils im Vorlauf und Rücklauf am Verteilkreis angeordnet sind, und mittels eines Durchflussmengesensors (D1) des Heizfluids.

5. Verfahren nach einem der Ansprüche 1 bis 4, wobei ferner eine Berechnung eines Finanzäquivalents für nicht abrechenbare Energiemengen erfolgt, nämlich für die Energiemenge Q3 und gegebenenfalls für die Energiemenge Q2NF, wobei Q3 + Q2NF gleich Q1 - Q2F ist, wobei dieses Finanzäquivalent dazu bestimmt ist, angezeigt zu werden.

6. Verfahren nach einem der Ansprüche 1 bis 5, wobei die Wärmepumpe keine elektrische Pumpe aufweist und der Stromverbrauch der Heizungsanlage viel niedriger als Q1 ist, beispielsweise niedriger als 10 % von Q1nom, wobei Q1nom der Nennleistung der Heizungsanlage entspricht.

7. Vorrichtung zum Angeben des Verbrauches und/oder des Wirkungsgrads einer Heizungsanlage, wobei die Heizungsanlage zumindest eine Wärmepumpe (1) die einem thermischen Kompressor (14), der mittels einer Wärmeenergiezufuhr in Bewegung gesetzt wird, einen Heizfluidverteilkreis (2) und eine Mehrzahl von Konvektoren oder Radiatoren (20) hat, wobei die Vorrichtung enthält:

- Einrichtungen zum Ermitteln der Energiemenge Q3, die einer kostenlosen Energie entspricht, die der Außenumgebung entnommen wird, oder Einrichtungen zum Ermitteln der Energiemenge Q1, die den Konvektoren oder Radiatoren bereitgestellt wird,
- Einrichtungen zum Ermitteln der Energiemenge, die einem abgerechneten Verbrauch (Q2, Q2A) an von der Wärmepumpe verbrauchtem Brennstoff entspricht,
- eine elektronische Einheit (8), an welche die Einrichtungen zum Ermitteln der Energiemengen Q2 und Q3 oder Q1 angeschlossen sind, wobei die elektronische Einheit dazu ausgelegt ist, um Energiemengen (Q2, Q3) über eine vorbestimmte Zeitspanne zu berechnen und/oder um diese Informationen auf einem Anzeigebildschirm anzuzeigen und/oder um diese Daten für die Ausgabe eines Dokuments bereitzustellen, das zur Abrechnung für den Kunden bestimmt ist,
**dadurch gekennzeichnet,**
**dass** der thermische Kompressor als Kältequelle im Wesentlichen den Heizfluidverteilkreis verwendet.

8. Vorrichtung nach Anspruch 7, wobei die Wärmeenergiezufuhr im Wesentlichen mittels eines Brennstoffbrenners (15) erfolgt, wobei der Brennstoff vorzugsweise Gas oder Heizöl ist und der abgerechnete Verbrauch Q2F mittels eines Gas- oder Heizölzählers (D2) gemessen wird.

9. Vorrichtung nach einem der Ansprüche 7 oder 8, ferner enthaltend Temperatur-(T3, T4) und Durchflussmengensensoren bezogen auf eine äußere Einheit (12) der Wärmepumpe zum Messen der Energiemenge Q3, die einer in der Außenumgebung entnommenen kostenlosen Energie entspricht.

10. Vorrichtung nach einem der Ansprüche 7 bis 9, ferner enthaltend Temperatur-(T1, T2) und Durchflussmengensensoren (D1) bezogen auf den Heizverteilkreis zum Messen der Energiemenge Q1, die dem Heizverteilkreis bereitgestellt wird.

11. Vorrichtung nach einem der Ansprüche 7 bis 10, wobei die Wärmepumpe keine elektrische Pumpe aufweist und der Stromverbrauch der Heizungsanlage viel niedriger als Q1 ist, beispielsweise niedriger als 10 % von Q1nom, wobei Q1nom der Nennleistung der Heizungsanlage entspricht.

**Claims**

1. Method for indicating the consumption and/or efficiency of a heating unit to a user where said heating unit includes at least one heat pump (1) with a thermal compressor (14) driven by means of a thermal energy feed, a heating fluid distribution circuit (2) and a plurality of convectors or radiators (20) receiving a first energy quantity Q1, wherein the Method comprises at least:

A- determining, over a preset time period, a second energy quantity Q2, corresponding to said thermal energy feed and comprising a billed energy Q2F corresponding to a billable quantity of fuel consumed by the heat pump,
B- determining, over the same preset time period, a third energy quantity Q3 corresponding to free energy gathered in the outside environment, either (B1-) directly by means of temperature and flow-rate sensors relative to an outside unit of the heat pump, or (B2-) indirectly by measuring, over the same preset time period, the first energy quantity Q1 supplied to the distribution circuit and deducing Q3 from it by using Q3=Q1-Q2,
C- displaying at least the quantities Q2F and Q3, corresponding to the preset time period, on the display screen and/or a document intended for billing the client, **characterized in that** the thermal compressor mainly uses as cold source the heating fluid distribution circuit (2).

2. Method according to claim 1, wherein thermal energy feed is mainly provided by means of a combustible burner (15) .

3. Method according to claim 2, wherein the combustible includes gas and/or domestic fuel oil and/or wood pellets, and the billed consumption Q2F is measured by means of a meter (D2).

4. Method according to one of claims 1 to 3, wherein during step B2- the first energy quantity Q1 supplied to the distribution circuit is measured by means of first and second temperature sensors (T1, T2) respectively arranged on the outbound and on the return of the distribution circuit and by means of a heating fluid flow-rate sensor (D1).

5. Method according to one of claims 1 to 4, wherein a financial equivalent for the nonbillable energy quantities is additionally calculated, specifically for the energy quantity Q3, and if relevant for the energy quantity Q2NF, knowing that Q3+Q2NF is equal to Q1-Q2F, where this financial equivalent is meant to be displayed.

6. Method according to one of claims 1 to 5, wherein the heat pump does not have an electric pump and the electric consumption of the heating unit is far below Q1, for example less than 10% of Q1nom, where Q1nom corresponds to the nominal power of the heating unit.

7. Device for indicating the consumption and/or efficiency of a heating unit, said heating unit including at least one heat pump (1) having a thermal compressor (14) moved by means of a thermal energy feed, a heating fluid distribution circuit (2) and a plurality of convectors or radiators (20), wherein the device comprises:

- means for determining the energy quantity Q3 corresponding to free energy collected in the outside environment, or means for determining the energy quantity Q1 provided to the convectors or radiators;
- means for determining the quantity of energy corresponding to a billed consumption (Q2, Q2F) of combustible consumed by the heat pump,
- an electronic unit (8) to which the means for determining the energy quantities Q2 and Q3 or Q1 are connected,

this electronic unit being adapted for calculating energy quantities (Q2, Q3) over a preset time period, and/or for displaying this information on a display screen, and/or for preparing these data for printing of a document intended for billing the client, **characterized in that** the thermal compressor mainly uses as cold source the heating fluid distribution circuit (2).

8. Device according to claim 7, wherein the thermal energy feed is mainly done by means of a combustible burner (15), where the combustible is preferably gas, domestic fuel oil and where the billed consumption Q2F is measured by means of a gas or fuel oil meter (D2).

9. Device according to one of claims 7 or 8, additionally comprising temperature (T3, T4) and flow-rate (D3) sensors for a unit outside (12) the heat pump in order to measure the energy quantity Q3 corresponding to a free energy gathered in the outside environment.

10. Device according to one of claims 7 to 9, additionally including temperature (T1, T2) and flow-rate (D1) sensors relative to the heating distribution circuit in order to measure the energy quantity Q1 provided to the heating distribution circuit.

11. Device according to one of claims 7 to 10, wherein the heat pump does not have an electric pump and the electric consumption of the heating unit is far below Q1, for example less than 10% of Q1nom, where Q1nom corresponds to the nominal power of the heating unit.

**FIG. 1**

**FIG. 2**

## FIG. 3

9

Facture – Période du XX/XX/2012 au YY/YY/2012

|   |   | Consommation | P.U. | Coût. |
|---|---|---|---|---|
| 1 | Gaz | XXX KWh | XXX | XXXXX |
| 2 | Energie gratuite | XXX KWh | XXX | XXXXX |

Q2F

Q3

**RÉFÉRENCES CITÉES DANS LA DESCRIPTION**

**Documents brevets cités dans la description**

- US 20100174643 A
- FR 2971562 A1